# EUROPÄISCHE PATENTSCHRIFT

(11) **EP 0 992 466 B1**
(45) Veröffentlichungstag und Bekanntmachung des Hinweises auf die Patenterteilung: **15.10.2003**
(21) Anmeldenummer: 99113002.2
(22) Anmeldetag: 06.07.1999
(51) Int. Cl.: C04B 28/02, C04B 28/10, C09K 3/10, E04B 1/68

(54) **Dichtungselement mit einer wasserabweisenden Beimengung**
Sealing element with water-repellent admixture
Elément d' étanchéité avec additif hydrophobe

(30) Priorität: 08.10.1998 DE 19846280
(43) Veröffentlichungstag der Anmeldung: 12.04.2000
(73) Patentinhaber: Pflieger, Adrian, Dipl.-Ing., 72135 Dettenhausen (DE)
(72) Erfinder: Pflieger, Adrian, Dipl.-Ing., 72135 Dettenhausen (DE)
(74) Vertreter: Möbus, Daniela, Dr.-Ing.

(56) Entgegenhaltungen:
- EP-A- 0 037 717
- EP-A- 0 437 670
- EP-A- 0 696 558
- EP-A- 0 714 865
- DE-A- 4 217 183
- DE-U- 29 810 479
- US-A- 4 756 952
- CHEMICAL ABSTRACTS, vol. 106, no. 26, 29. Juni 1987 (1987-06-29) Columbus, Ohio, US; abstract no. 218700g, I.HAJNAL: "Filling holes, especially enclosed linear cavities, with posthardening materials" XP000184311 & HU 40 388 A 28. Dezember 1986 (1986-12-28)

## Beschreibung

Die Erfindung betrifft ein Dichtungselement mit einer wasserabweisenden Beimengung und/oder einer wasserabweisenden Ummantelung und mindestens einer wasserquellbaren Beimengung.

Bisher bekannte Fugendichtungen haben den Nachteil, dass sie vorzeitig und unkontrolliert quellen. Deshalb kann es unter Umständen nötig sein, ein bereits montiertes Fugendichtband, das im montierten Zustand vorzeitig und unkontrolliert gequollen ist, wieder auszubauen und es durch ein neues ungequollenes Fugendichtband zu ersetzen. Dies bedeutet in der Praxis einen hohen Zeitaufwand, der mit zusätzlichen Kosten verbunden ist. Zur Lösung dieses Problems wurden bisher Kompromisse eingegangen. Man hat deshalb entweder sehr schnelle und effektiv quellende Fugendichtungen oder sehr langsame und nicht sehr effektiv quellende Fugendichtungen verwendet. Die schnelle und effektiv quellende Fugendichtung entspricht zwar weitgehend den technischen Anforderungen, hat aber Nachteile bezüglich der Witterungsbeständigkeit, d. h. ein unkontrolliertes Quellen der Fugendichtung, beispielsweise in Folge von Regen, muss bisher noch akzeptiert werden.

Aus der EP 0 696 558 A2 ist eine Feinstzement-Bindemittel-Trockenmischung bekannt, die mit Wasser zu einer Suspension angerührt wird. Mit der Suspension werden anschließend Hohlräume und Risse in Betonbauten durch Injizieren oder Verpressen ausgefüllt. Die Trockenmischung kann auch Bentonit oder andere Quellkomponenten aufweisen, die das Schwinden der Suspension beim Aushärten kompensieren sollen.

Die Erfindung hat die Aufgabe, ein Dichtungselement der eingangs genannten Art dahin gehend zu verbessern, dass ein vorzeitiges Quellen verhindert wird und sich bildende Risse abgedichtet werden können.

Die Erfindung löst die gestellte Aufgabe mit einem Dichtungselement der eingangs genannten Art, das 5 - 20 Masse-% Feinstzemente mit einem Blainewert von 5.000 - 15.000 cm²/g oder 5 - 10 Masse-% Calciumhydroxid enthält. Vorzugsweise kann die mindestens eine wasserquellbare Beimengung 40 - 90 Masse-% Bentonit sein und das Dichtungselement außerdem 5 - 30 Masse-% Kautschuk, 5 - 15 Masse-% siliziumhaltigen Füller und 0 - 10 Masse-% öle enthalten. Ein Dichtungselement mit diesem Aufbau hat den Vorteil, dass es wasserabweisend und wasserunlöslich ist, aber beim Zusammentreffen mit alkalischen Medien lösbar ist. Dadurch werden beim Zusammentreffen mit alkalischen Medien die hydrophoben Eigenschaften des Dichtungselementes aufgehoben und es beginnt bei Wasserzutritt zu quellen. Genau dies ist dann der Fall, wenn das Dichtungselement mit dem Beton, der alkalische Eigenschaften aufweist, in Kontakt kommt.

Das Dichtungselement enthält alternativ 5 - 10 Masse-% Calciumhydroxid, das sich an Luft in wasserunlösliches Calciumcarbonat umwandelt, oder Feinstzemente. Das Calciumcarbonat (Kalkstein) oder die Feinstzemente dichten zusätzlich zu dem wasserquellbaren Bentonit feine Risse dauerhaft und wirkungsvoll ab. Das Dichtungselement erhält dadurch selbstheilende Eigenschaften.

Für die elastischen Eigenschaften des Dichtungselementes kann der Kautschuk als Hauptbestandteil Polyisobutylenkautschuk enthalten.

Damit das Dichtungselement keine zu klebrigen Eigenschaften aufweist, kann der siliziumhaltige Füller Quarzsand oder Quarzmehl enthalten.

Je nachdem, ob eine preiswerte Herstellung oder eine effektive wasserabweisende Eigenschaft realisiert werden soll, kann die wasserabweisende Beimengung mit der wasserquellbaren Beimengung vermischbar sein und/oder die wasserabweisende Beimengung von außen auf die wasserquellbare Beimengung aufgebracht werden, beispielsweise durch Extrudieren.

Damit ein vorzeitiges Quellen des Dichtungselementes zuverlässig verhindert wird, kann die wasserabweisende Beimengung oder Ummantelung in alkalischen Medien lösbar sein.

Aus Gründen der leichten Verarbeitbarkeit kann das Dichtungselement 5 - 20 Masse-% eines in alkalischen Medien lösbaren pulverförmigen Polymers enthalten.

## Patentansprüche

1. Dichtungselement mit einer wasserabweisenden Beimengung und/oder einer wasserabweisenden Ummantelung und mindestens einer wasserquellbaren Beimengung, **dadurch gekennzeichnet, dass** es 5 - 20 Masse-% Feinstzemente mit einem Blainewert von 5.000 - 15.000 cm²/g oder 5 - 10 Masse-% Calciumhydroxid enthält.

2. Dichtungselement nach Anspruch 1, **dadurch gekennzeichnet, dass** die mindestens eine wasserquellbare Beimengung 40 - 90 Masse-% Bentonit ist und das Dichtungselement außerdem 5 - 30 Masse-% Kautschuk, 5 - 15 Masse-% siliziumhaltigen Füller und 0 - 10 Masse-% öle enthält.

3. Dichtungselement nach Anspruch 2, **dadurch gekennzeichnet, dass** der Kautschuk als Hauptbestandteil Polyisobutylenkautschuk enthält.

4. Dichtungselement nach Anspruch 2 oder 3, **dadurch gekennzeichnet, dass** der siliziumhaltige Füller Quarzsand oder Quarzmehl enthält.

5. Dichtungselement nach einem der Ansprüche 1 bis 4, **dadurch gekennzeichnet, dass** die wasserabweisende Beimengung mit der wasserquellbaren Beimengung vermischbar ist und/oder die wasserabweisende Beimengung von außen auf die wasserquellbare Beimengung aufgebracht ist.

6. Dichtungselement nach einem der Ansprüche 1 bis 5, **dadurch gekennzeichnet, dass** die wasserabweisende Beimengung oder Ummantelung in alkalischen Medien lösbar ist.

7. Dichtungselement nach Anspruch 6, **dadurch gekennzeichnet, dass** es 5 - 20 Masse-% eines in alkalischen Medien lösbaren pulverförmigen Polymers enthält.

## Claims

1. Sealing element with a water-repellent admixture and/or a water-repellent coating and at least one water-expandable admixture, **characterised by** the fact that it contains 5 - 20 mass % of fine cement with a Blaine value of 5,000 - 15,000 cm²/g or 5 - 10 mass % of calcium hydroxide.

2. Sealing element according to claim 1, **characterised by** the fact that at least one water-expandable admixture is 40 - 90 mass % of bentonite and the sealing element also contains 5 - 30 % mass of rubber, 5 - 15 mass % of filler containing silicon and 0 - 10 mass % of oil.

3. Sealing element according to claim 2, **characterised by** the fact that the rubber contains polyisobutylene rubber as a major component.

4. Sealing element according to claim 2 or 3, **characterised by** the fact that the filler containing silicon contains silica sand or quartz powder.

5. Sealing element according to one of claims 1 to 4, **characterised by** the fact that the water-repellent admixture can be mixed with the water-expandable admixture and/or the water-repellent admixture is externally applied to the water-expandable admixture.

6. Sealing element according to one of claims 1 to 5, **characterised by** the fact that the water-repellent admixture or coating can be dissolved in alkaline media.

7. Sealing element according to claim 6, **characterised by** the fact that it contains 5 - 20 mass % of a polymer in powder form which can be dissolved in alkaline media.

## Revendications

1. Elément d'étanchéité avec un additif hydrophobe et/ou un gainage hydrophobe et au moins un additif gonflant dans l'eau, **caractérisé en ce qu'**il contient de 5 à 20 % en masse de ciments très fins avec un coefficient de Blaine de 5 000 à 15 000 cm²/g ou de 5 à 10 % en masse d'hydroxyde de calcium.

2. Elément d'étanchéité selon la revendication 1, **caractérisé en ce que** le au moins un additif gonflant à l'eau est de la bentonite à raison de 40 à 90 % en masse, et l'élément d'étanchéité contient en outre 5 à 30 % en masse de caoutchouc, 5 à 15% en masse de charge contenant du silicium et 0 à 10 % en masse d'huiles.

3. Elément d'étanchéité selon la revendication 2, **caractérisé en ce que** le caoutchouc contient comme constituant principal du caoutchouc polyisobutylène.

4. Elément d'étanchéité selon la revendication 2 ou 3, **caractérisé en ce que** la charge contenant du silicium contient du sable de quartz ou de la poudre de quartz.

5. Elément d'étanchéité selon l'une des revendications 1 à 4, **caractérisé en ce que** l'additif hydrophobe peut être mélangé à l'additif gonflant à l'eau et/ou l'additif hydrophobe peut être appliqué de l'extérieur sur l'additif gonflant à l'eau.

6. Elément d'étanchéité selon l'une des revendications 1 à 5, **caractérisé en ce que** l'additif hydrophobe ou le gainage est soluble dans des milieux alcalins.

7. Elément d'etanchéité selon la revendication 6, **caractérisé en ce qu'**il contient de 5 ä 20 % en masse d'un polymère pulvérent soluble dans de milieux alcalins.
